# FASCICULE DE BREVET EUROPEEN

(11) **EP 0 340 094 B1**
(45) Date de publication et mention de la délivrance du brevet: **15.09.1993**
(21) Numéro de dépôt: 89401159.2
(22) Date de dépôt: 24.04.1989
(51) Int. Cl.: B29C 65/60, B60R 13/02

(54) **Procédé d'assemblage par rivetage d'une première pièce en matière plastique et d'une seconde pièce.**
Verfahren zum Verbinden von einem ersten Gegenstand aus Kunststoff und einem zweiten Gegenstand durch Nieten.
Process for joining by riveting a first part made of plastic to a second part.

(30) Priorité: 27.04.1988 FR 8805627
(43) Date de publication de la demande: 02.11.1989
(73) Titulaire: AUTOMOBILES PEUGEOT, 75116 Paris (FR); AUTOMOBILES CITROEN, 92200 Neuilly-sur-Seine (FR)
(72) Inventeur: De Bortoli, Lucio, F-78700 Conflans St. Honorine (FR); Noirez, Eric, F-92000 Nanterre (FR)
(74) Mandataire: Bouget, Lucien

(56) Documents cités:
- EP-A- 0 160 425
- DE-A- 1 471 759
- DE-A- 2 132 992
- DE-A- 3 210 310
- FR-A- 1 101 391
- FR-A- 1 137 967
- FR-A- 2 071 122
- FR-A- 2 135 058
- FR-A- 2 138 503
- GB-A- 567 418
- US-A- 1 332 394
- US-A- 2 362 902
- US-A- 4 574 555
- PATENT ABSTRACTS OF JAPAN, vol. 12, no. 61 (M-671)[2908], 24 février 1988; & JP-A-62 207 629 (TOYOTA MOTOR CORP.) 12-09-1987
- IDEM
- MECASONIC SA; Bas-Monthoux, Annemasse; "Applications des ultra-sons aux thermoplastiques" * Page 18, figures *

## Description

L'invention concerne un procédé d'assemblage par rivetage d'une première pièce en matière plastique et d'une seconde pièce, selon le préambule de la revendication 1. Un tel procédé est connu de JP-A-62 207 629.

Dans l'industrie automobile, on est amené à réaliser l'assemblage de pièces en matière plastique, par exemple l'assemblage d'un panneau de carrosserie sur un support tel qu'une doublure de porte en matière synthétique. Un tel assemblage est généralement réalisé par sertissage, collage ou vissage.

De tels procédés sont d'une mise en oeuvre relativement difficile et qui n'est pas aisément automatisable. De plus, ces procédés d'assemblage nécessitent l'utilisation de moyens de liaison tels que de la colle ou des vis qui doivent être fournis à la machine d'assemblage en quantité voulue, pendant son fonctionnement.

Il en est de même dans le cas où l'assemblage est réalisé par rivetage en utilisant des rivets métalliques ou encore des dispositifs d'ancrage ayant une partie expansible et une broche d'expansion comme décrit dans le FR-A-2.132.992.

On connaît également des procédés d'assemblage dans lesquels on réalise la fusion d'une pièce en matière plastique en la soumettant à des ondes ultrasonores. Par exemple, dans le brevet FR-A-2.291.843, on a proposé de réaliser la fixation de baguettes métalliques constituant des enjoliveurs sur des supports en matière synthétique, en faisant fondre par ultrasons, certaines zones de la pièce en matière synthétique placées en coïncidence avec des zones d'ancrage des baguettes métalliques. En exerçant une pression sur les baguettes métalliques, on réalise l'introduction par pression des zones d'ancrage dans la matière synthétique, ces zones d'ancrage restant emprisonnées dans la matière synthétique après son refroidissement et son durcissement.

Un tel procédé ne peut pas être appliqué à l'assemblage de pièces en matière plastique entre elles et dans le cas de l'assemblage d'un élément de structure métallique et d'un panneau en matière plastique, la mise en oeuvre de ce procédé nécessiterait de prévoir une mise en forme complexe et coûteuse de l'élément métallique, dans sa zone de jonction.

On connaît également des procédés d'assemblage de deux pièces dont l'une au moins est en matière plastique, par rivetage et/ou soudure aux ultrasons. Ces procédés sont cependant d'une mise en oeuvre complexe et qui n'est pas facilement automatisable.

Par exemple, dans le US-A-4.574.555, on décrit un procédé d'assemblage d'un panneau utilisant une pièce d'assemblage en matière plastique dans laquelle on réalise le serrage des pièces à assembler. La matière constituant la pièce d'assemblage est chauffée par les ultrasons et flue à travers des ouvertures des pièces à assembler. Un rivet traversant la pièce d'assemblage et les pièces à assembler peut également être utilisé pour assurer la jonction. Dans tous les cas, il faut prévoir des pièces d'assemblage indépendantes des pièces à assembler. Dans le cas où le procédé doit être réalisé sur une chaîne de production, il faut prévoir des moyens supplémentaires d'amenée des pièces d'assemblage, ce qui complique le procédé et augmente le coût des installations.

Le JP-A-62207629 et le FR-A-2.071.122 sont relatifs à la fixation d'une pièce métallique dans une pièce en matière plastique, par soudage, éventuellement au moyen d'ultrasons. La pièce métallique est percée d'une ouverture et la pièce en matière plastique comporte une excroissance dans une partie venant en vis-à-vis de l'ouverture de la pièce métallique, lors de l'assemblage des pièces. La matière plastique, dans la zone comportant l'excroissance, est échauffée et repoussée à travers l'ouverture de la pièce métallique puis soudée sur une partie de la pièce en matière plastique, de manière à assurer la fixation de la pièce métallique par rivetage.

Ce procédé permet de réaliser la fixation sans utiliser de rivets ou autres éléments d'assemblage qui doivent être amenés dans la zone d'assemblage.

Le but de l'invention est donc de proposer un procédé d'assemblage par rivetage d'une première pièce en matière plastique et d'une seconde pièce comportant chacune au moins une partie d'assemblage, la première pièce comportant en outre au moins un rivet solidaire d'une partie d'assemblage, le procédé consistant à placer les deux pièces dans une position d'assemblage dans laquelle les parties d'assemblage des deux pièces sont en vis-à-vis, à provoquer un échauffement et une fusion au moins partielle du rivet en le soumettant à des ondes ultrasonores et à réaliser la jonction par soudage d'une extrémité du rivet à l'une au moins des parties d'assemblage des deux pièces en vis-à-vis, procédé qui soit d'une mise en oeuvre simple et facilement automatisable, d'une grande efficacité et qui fournisse une jonction d'une grande résistance.

Dans ce but, le rivet est constitué par un pion venu de matière ou rapporté sur la partie d'assemblage de la première pièce en matière plastique et relié à celle-ci par une collerette de faible épaisseur au niveau d'une ouverture traversant la première pièce et, sous l'effet des ondes ultrasonores, ledit rivet est séparé de la première pièce par fusion de la collerette puis soudé à la première pièce, à l'intérieur de l'ouverture traversant celle-ci.

Afin de bien faire comprendre l'invention, on va maintenant décrire, à titre d'exemples non limitatifs, en se référant aux figures jointes en annexe, plusieurs modes de réalisation d'un procédé d'assemblage suivant l'invention appliqué à la fixation d'un panneau extérieur de carrosserie automobile sur une doublure de porte.

La figure 1 est une vue en perspective montrant le panneau extérieur en cours de montage sur la doublure.

Les figures 1A, 1B et 1C sont des vues en coupe suivant 1-1 de la figure 1 montrant la mise en oeuvre du procédé d'assemblage suivant l'invention et suivant une première variante de réalisation.

Les figures 2A, 2B et 2C sont des vues analogues aux figures 1A, 1B et 1C montrant la mise en oeuvre du procédé d'assemblage suivant l'invention et suivant une seconde variante de réalisation.

Les figures 3A, 3B et 3C sont des vues analogues aux figures 1A, 1B et 1C montrant la mise en oeuvre du procédé d'assemblage suivant l'invention et suivant une troisième variante de réalisation.

Les figures 4A, 4B et 4C sont des vues analogues aux figures 1A, 1B et 1C montrant la mise en oeuvre du procédé suivant l'invention et suivant une quatrième variante.

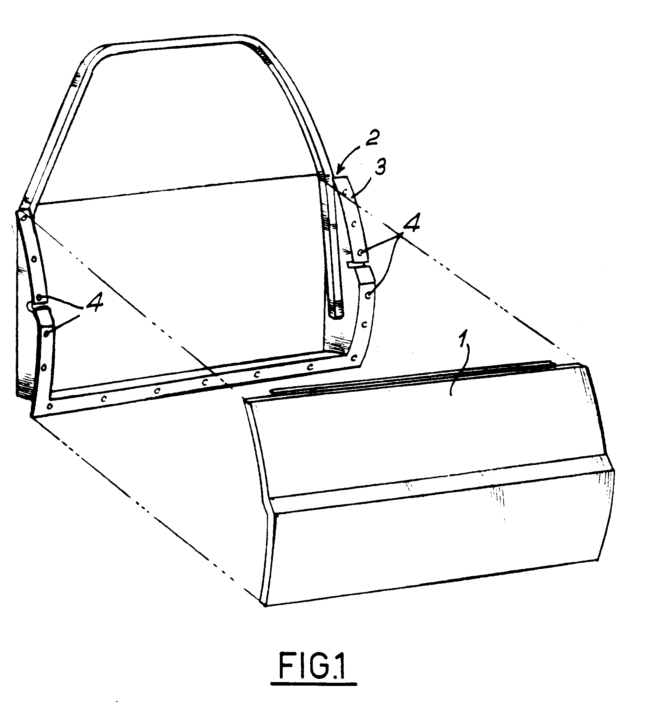

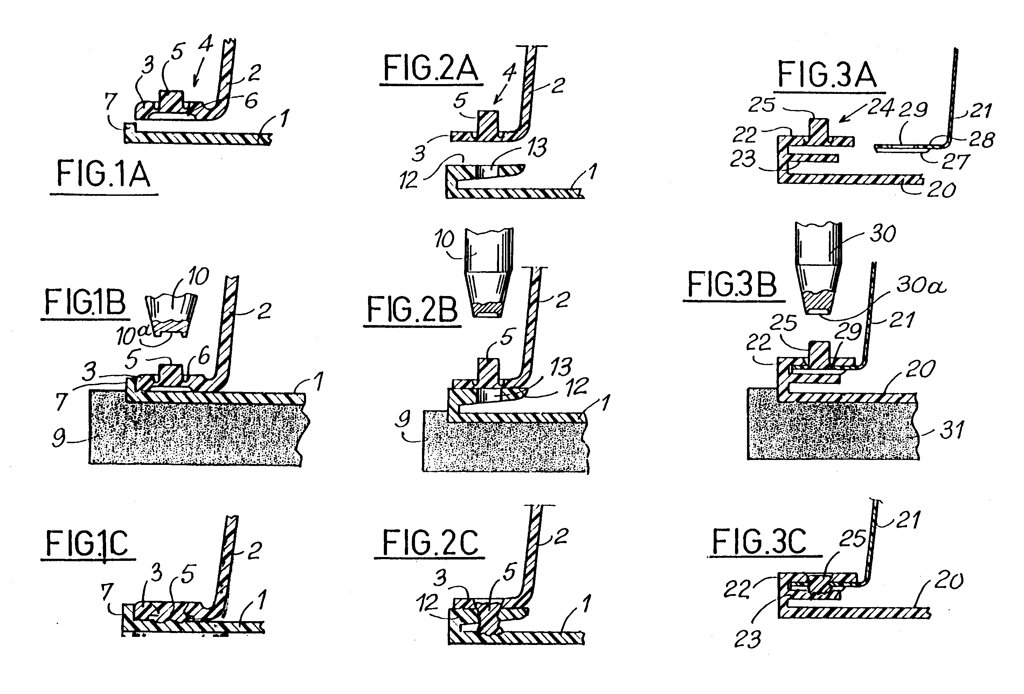

Sur la figure 1, on voit une porte de véhicule automobile en cours d'assemblage comportant un panneau extérieur 1 et une doublure intérieure 2 présentant un rebord d'assemblage 3 en saillie sur sa face extérieure.

L'assemblage du panneau 1 et de la doublure 2 le long du rebord 3 est effectué suivant des zones de rivetage 4, par le procédé suivant l'invention.

Sur les figures 1A, 1B et 1C, on are présenté différentes phases successive du procédé d'assemblage suivant l'invention et suivant une première variante de réalisation dans laquelle le panneau extérieur 1 et la doublure intérieure 2 sont l'un et l'autre constitués par une matière thermoplastique tel que le polypropylène ou le PVC.

Le rebord d'assemblage en saillie 3 de la doublure 2, comme il est visible sur la figure 1A, comporte des zones d'assemblage telles que 4 constituées par un rivet ou pion 5 venu de matière avec le rebord 3 en matière thermoplastique relié au rebord 3 par l'intermédiaire d'une couronne 6 de matière thermoplastique de faible épaisseur. Les zones de rivetage 4 peuvent être réalisées sur le rebord 3, par thermoformage à la presse.

Le panneau extérieur 1 comporte un rebord extérieur 7 destiné à venir s'adapter sur le contour extérieur du rebord 3 de la doublure 2. Sur la figure 1A, on a représenté les parties d'assemblage correspondantes du panneau 1 et de la doublure 2, dans leur position de montage. La face intérieure du panneau 1 est dirigée vers la doublure 2 et la face extérieure visible du panneau reste accessible par l'extérieur.

Dans une deuxième phase, comme représenté sur la figure 1B, on vient placer un support de montage 9 comportant un logement de forme appropriée, contre la surface extérieure visible du panneau 1. La doublure 2 est placée contre le panneau 1, dans sa position d'assemblage et une machine de soudage par ultrasons est utilisée pour assurer l'assemblage dans pièces 1 et 2 par rivetage et soudure.

La machine de soudage comporte une ou plusieurs sonotrodes 10 dont la partie d'extrémité 10a présente une légère dépression dont la forme et la dimension correspondent à celles d'un rivet ou pion 5.

La machine comporte un générateur d'ultrasons ou de vibrations couplé à la sonotrode 10.

Dans le cas où la machine comporte plusieurs sonotrodes, celles-ci sont couplées au même générateur d'ultrasons et espacées de façon à pouvoir être appliquées simultanément sur des rivets 5 situés dans des zones d'assemblage 4 successives du rebord 3 de la doublure 2.

Les sonotrodes 10 sont mises en contact par leur extrémité 10a avec les rivets 5 et les ultrasons provoquent l'échauffement et la fusion partielle du rivet 5 et de la zone avoisinante du rebord 3. Dans un premier temps, la chaleur communiquée à la couronne 6 de faible épaisseur provoque sa rupture et sa fusion, si bien que le rivet 5 est séparé du rebord 3 et poussé par la sonotrode 10 à travers l'ouverture du rebord 3 libérée par la fusion de la couronne 6. Le rivet 5 échauffé et partiellement en fusion vient en contact avec la surface intérieure du panneau 1 sur laquelle il se soude. Simultanément, le rivet 5 est soudé à l'intérieur de l'ouverture du rebord 3 dont les bords sont partiellement en fusion.

Comme il est visible sur la figure 1C, à la fin du mouvement d'avance de la sonotrode 10, le rivet 5 comprimé entre la sonotrode 10 et le panneau 1 et amolli ou partiellement fondu sous l'effet de l'échauffement, s'est dilaté radialement à l'intérieur de l'ouverture du rebord 3 dans laquelle il se trouve soudé. De plus, l'extrémité du rivet 5 provoque la fusion partielle du panneau 1 sur lequel l'extrémité du rivet 5 se trouve soudée.

Le rivet en fin d'assemblage et la zone soudée sont représentés sur la figure 1C.

Sur les figures 2A, 2B et 2C, on a représenté la mise en oeuvre du procédé d'assemblage suivant l'invention et suivant une seconde variante de réalisation, dans le cas où le panneau extérieur 1 en matière thermoplastique comporte un rebord d'assemblage 12 parallèle au panneau et en retour du côté de sa face interne.

La doublure 2 est pratiquement identique à la doublure du mode de réalisation des figures 1A à 1C et comporte un rebord 3 sur lequel sont prévues des zones d'assemblage 4 comportant chacune un rivet 5 venu de matière avec la doublure 2 et relié par une collerette 6 de faible épaisseur au rebord 3 de la doublure. Le rebord 12 du panneau 1 comporte des ouvertures 13 dont la dimension et la disposition correspondent à la dimension et à la disposition des rivets 5 sur le rebord 3 de la doublure 2.

Dans un premier temps (figure 2A), le panneau 1 et la doublure 2 sont mis en position d'assemblage, chacune des zones d'assemblage 4 de la doublure 2 étant en vis à vis d'une ouverture 13 du rebord 12 du panneau 1. Dans cette position, comme il est visible sur la figure 2A, les axes du rivet 5 et de l'ouverture 13 correspondante sont alignés.

Le rivetage et la soudure sont réalisés comme précédemment, en utilisant une sonotrode 10 (figure 2B). La sonotrode 10 vient en prise avec le rivet 5 dont elle provoque l'échauffement.

Cet échauffement et la poussée de la sonotrode 10 provoquent la rupture de la couronne 6 et la séparation du rivet 5 du rebord 3. Le rivet 5 amolli et au moins partiellement fondu est alors extrudé à l'intérieur de l'ouverture 13 et poussé jusqu'à venir en contact avec la face intérieure du panneau 1. On réalise ainsi la liaison par soudure entre le rivet 5 et le panneau 1, à l'intérieur de l'ouverture 13 du rebord 12 et sur la face intérieure de ce panneau. Simultanément, une partie du rivet s'élargit à l'intérieur de l'ouverture libérée par la rupture de la couronne 6 dans le rebord 3 et se soude à l'intérieur de cette ouverture.

Comme il est visible sur la figure 2C, on réalise ainsi l'assemblage du panneau 1 et de la doublure 2, les zones de soudure du rivet 5 étant constituées par les bords des ouvertures des rebords 3 et 12 situées dans l'alignement l'une de l'autre et la zone de la surface intérieure du panneau 1 en contact avec l'extrémité du rivet 5.

Sur les figures 3A, 3B et 3C, on a représenté différentes phases successives au cours d'une opération d'assemblage suivant l'invention et suivant une troisième variante de réalisation.

Dans ce mode de réalisation, on réalise l'asemblage d'un panneau 20 en matière thermoplastique constituant le panneau extérieur de carrosserie d'une porte de véhicule automobile avec une doublure 21 en tôle d'acier constituant la structure de la porte de véhicule.

La forme générale des pièces 20 et 21 est analogue à la forme des pièces 1 et 2 représentées sur la figure 1.

Le panneau 20 comporte un rebord 22 parallèle au panneau et situé du côté de sa face interne. Le rebord 22 constitue des zones d'assemblage telles que 24 espacées suivant la longueur du rebord 22 et comportant chacune un rivet 25 venu de matière avec le rebord 22 et relié à celui-ci par une collerette de faible épaisseur 26.

Le panneau 20 comporte également un rebord intermédiaire 23 parallèle au panneau 20 et intercalé entre le rebord 22 et la surface intérieure cachée du panneau 20.

La doublure en tôle 21 comporte un rebord d'assemblage 28 réalisé par pliage d'un bord de la tôle et présentant des ouvertures 29 espacées suivant la longueur du rebord 28, l'espacement des ouvertures 29 correspondant à l'espacement des zones d'assemblage 24 du panneau 20. La doublure 21 comporte également des nervures 27 en saillie par rapport à la surface du rebord 28 dirigée vers l'extérieur. Les nervures 27 sont intercalées entre les ouvertures 29 du rebord 28.

Comme il est visible sur les figures 3A et 3B, le rebord de la doublure 21 est introduit latéralement dans l'espace réservé entre les rebords 22 et 23 du panneau 20. Le rebord 28 vient en contact avec le rebord 23 par l'intermédiaire des nervures 27 et les ouvertures 29 viennent chacune en concordance et en alignement axial avec un rivet 25.

L'assemblage, comme il est visible sur la figure 3B est réalisé en utilisant une sonotrode 30 d'une machine de soudage par ultrasons et un support 31 sur lequel la face extérieure du panneau 20 est en appui. L'extrémité 30a de la sonotrode 30 est mise en contact avec l'extrémité du rivet 25 dirigée vers l'extérieur. L'échauffement du rivet provoque la fusion et la rupture de la couronne 26, le rivet étant alors détaché et poussé par l'intermédiaire de la sonotrode 30 à travers l'ouverture 29. L'extrémité du rivet 25 vient en contact avec le rebord intermédiaire 23 sur lequel cette extrémité se soude. Simultanément, le rivet fondu et élargi diamétralement vient se souder à l'intérieur de l'ouverture libérée par la fusion et la rupture de la couronne 26, dans le rebord 22.

Comme il est visible sur la figure 3C, l'assemblage du panneau 20 et de la doublure 21 est assuré par l'intermédiaire du rivet 25 traversant l'ouverture 29 du rebord 28 de la doublure 21 et soudé sur les rebords 22 et 23.

La méthode d'assemblage représentée sur les figures 3A à 3C a l'avantage d'éviter tout échauffement et toute déformation de la surface visible du panneau, l'extrémité du rivet 25 venant se souder sur le rebord intermédiaire 23. Ce mode de réalisation est particulièrement bien adapté au cas de panneaux de carrosserie de faible épaisseur ou réalisé en matériau fragile.

En outre, dans le mode d'assemblage représenté aux figures 3A à 3C, le rivet en matière thermoplastique 25 n'est pas soudé sur la doublure mais simplement engagé dans une ouverture traversant le rebord de cette doublure. Ce mode de réalisation est donc très bien adapté au cas de matériaux non compatibles quant à leur soudure, pour constituer respectivement le panneau extérieur de carrosserie et la doublure. Il en est ainsi, dans le cas d'une doublure en acier ou en matériau composite et d'un panneau de carrosserie en matière thermoplastique.

En outre, les ouvertures 29 prévues dans le rebord d'assemblage de la doublure 21 peuvent avoir une dimension et une forme permettant une certaine latitude de déplacement relatif entre le panneau et la doublure. Un tel montage peut être intéressant dans le cas où des dilatations différentielles sont à prévoir.

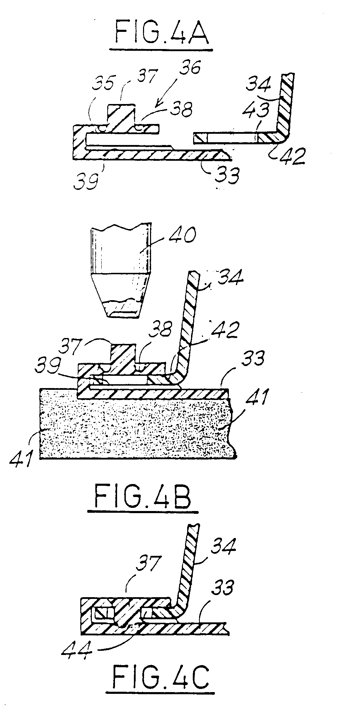

Sur les figures 4A, 4B et 4C, on a représenté différentes phases du procédé d'assemblage suivant l'invention et suivant une quatrième variante de réalisation. Le procédé est mis en oeuvre pour assembler un panneau extérieur de carrosserie 33 d'une porte de véhicule automobile à une doublure 34 en matière thermoplastique, la forme générale de ces pièces étant identique à la forme des pièces représentées sur la figure 1.

Le panneau 33 comporte un rebord d'assemblage 35 parallèle à la surface du panneau et disposé du côté de sa face intérieure. Le rebord d'assemblage 35 comporte des zones d'assemblage successives telles que 36 espacées suivant sa longueur. Chacune des zones d'assemblage 36 comporte un rivet 37 venu de matière avec le rebord 35 du panneau 33 et relié au rebord 35 par l'intermédiaire d'une collerette de faible épaisseur 38. Des nervures en saillie 39 venues de matière avec le panneau 33 sont disposées sur la surface intérieure du panneau, en vis à vis du rebord d'assemblage 35.

La doublure 34 comporte un rebord d'assemblage 42 percé de trous oblongs 43 dans des positions correspondant aux positions des zones d'assemblage 36 du rebord 35 du panneau 33.

Comme il est visible sur la figure 4B, on réalise l'assemblage du panneau 33 et de la doublure 34 en engageant le rebord 42 de la doublure 34 dans l'espace réservé entre le rebord 35 et la surface intérieure du panneau 33. Le rebord 42 vient en appui sur les nervures 39 du panneau 33, de sorte qu'un certain écartement est maintenu entre le talon du rebord 42 et la surface intérieure du panneau 33. On préserve ainsi une certaine latitude de déplacement relatif du panneau et de la doublure, même dans le cas où ces pièces présentent des bavures dans leurs zones en vis-à-vis.

L'assemblage est réalisé en utilisant une sonotrode 40 d'une machine de soudage à ultrasons et à un support de montage 41 en appui sur la surface extérieure du panneau 33.

Les vibrations ultrasonores transmises par la sonotrode 40 au rivet 37 provoquent l'échauffement et la rupture de la collerette 38 et donc la séparation du rivet 37 qui est poussé par la sonotrode 40, à travers l'ouverture oblongue 43, jusqu'à venir en contact avec les nervures 39 du panneau 33. Le rivet 37 est échauffé et partiellement fondu, ce qui permet de réaliser la soudure de son extrémité opposée à la sonotrode sur la surface intérieure du panneau 33 ainsi que la soudure de son autre extrémité à l'intérieur de l'ouverture dégagée lors de la rupture de la collerette 38.

Comme il est visible sur la figure 4C, en fin d'opération, le rivet 37 est fixé par soudure sur le rebord 35 et sur la surface intérieure du panneau 33. De plus, le rivet 37 qui traverse l'ouverture oblongue 43 maintient la doublure 34 sur le panneau 33.

Le panneau 33 et la doublure 34 gardent cependant une certaine latitude de déplacement dans la direction longitudinale de l'ouverture oblongue 43, un jeu 44 étant ménagé entre les extrémités longitudinales de l'ouverture 43 et le rivet 37. Cette latitude de déplacement permet d'absorber des dilatations différentielles entre le panneau et la doublure.

De plus, le mode d'assemblage représenté sur les figures 4A à 4C ne suppose pas de soudure entre la matière thermoplastique du rivet, c'est-à-dire la matière thermoplastique du panneau 33 et la matière constituant la doublure 34. En conséquence, cette doublure peut être constituée par un matériau quelconque non soudable à la matière thermoplastique du panneau 33. La doublure 34 pourra être par exemple constituée par une tôle d'acier ou par une pièce en matériau composite.

Dans tous les cas, le procédé suivant l'invention a permis de réaliser très rapidement et par un procédé facilement automatisable mis en oeuvre à partir d'un outillage classique, la fixation d'un panneau en matière plastique sur une pièce en matière plastique, en métal ou en matériau composite.

L'invention peut être mise en oeuvre pour l'assemblage de pièces en des matériaux qui ne sont pas soudables l'un à l'autre. La méthode d'assemblage permet également de ménager un certain jeu de montage entre les deux pièces assemblées.

Dans la mesure où l'on effectue un rivetage à partir de pions en matière plastique venus de matière avec l'une des pièces, la mise en oeuvre du procédé d'assemblage est simplifiée puisqu'on n à plus à approvisionner la zone ou la machine de soudage avec des éléments d'assemblage tels que des rivets.

L'invention ne se limite pas aux modes de réalisation qui ont été décrits.

C'est ainsi qu'on peut imaginer l'assemblage, par le procédé suivant l'invention, de pièces de forme et de destination différentes de celles qui ont été décrites. Ces pièces peuvent avoir des rebords ou languettes d'assemblage d'une forme différente de celles qui ont été décrites. Ces rebords ou languettes d'assemblage peuvent comporter des rivets ou pions d'assemblage thermoplastiques rapportés ou venus de matière avec le rebord.

Le soudage peut être réalisé en utilisant une machine à ultrasons ou toute autre machine à vibrations permettant d'échauffer et de fondre une pièce en matière plastique telle qu'un pion ou un rivet.

Les pièces à assembler pourront être constituées par des matières quelconques. Cependant, l'une des deux pièces devra être constituée par une matière plastique dont on peut réaliser l'échauffement et le soudage sous l'effet d'ultrasons ou de vibrations analogues.

## Revendications

1. Procédé d'assemblage par rivetage d'une première pièce (2, 20, 33) en matière plastique et d'une seconde pièce (1, 21, 34) comportant chacune au moins une partie d'assemblage (3, 12, 22, 28, 35, 42), la première pièce comportant en outre au moins un rivet (5, 25, 37) solidaire d'une partie d'assemblage (3, 22, 35), le procédé consistant à placer les deux pièces dans une position d'assemblage dans laquelle les parties d'assemblage (3, 12, 22, 28, 35, 42) des deux pièces sont en vis-à-vis, à provoquer un échauffement et une fusion au moins partielle du rivet (5, 25, 37) en le soumettant à des ondes ultrasonores et à réaliser la jonction par soudage d'une extrémité du rivet à l'une au moins des parties d'assemblage (3, 12, 22, 28, 35, 42) des deux pièces en vis-à-vis, caractérisé par le fait que le rivet (5, 25, 37) est constitué par un pion venu de matière ou rapporté sur la partie d'assemblage (3, 22, 35) de la première pièce (2, 20, 33) en matière plastique et relié à celle-ci par une collerette de faible épaisseur (6, 38) au niveau d'une ouverture traversant la première pièce (2, 20, 33) et que, sous l'effet des ondes ultrasonores, ledit rivet (5, 25, 37) est séparé de la première pièce par fusion de la collerette puis soudé à la première pièce (2, 20, 33), à l'intérieur de l'ouverture traversant celle-ci.

2. Procédé suivant la revendication 1, caractérisé par le fait que le pion en matière plastique (5) est de plus poussé et extrudé à l'intérieur d'une ouverture (13) traversant un rebord d'assemblage (12) de la seconde pièce (1) parallèle à cette pièce (1) et en retour vers l'intérieur de la pièce (1).

3. Procédé suivant la revendication 1, caractérisé par le fait que le rivet en matière plastique est constitué par un pion (37) venu de matière ou rapporté sur une partie d'assemblage (35) de l'une des pièces (33) et que la seconde pièce (34) comporte une ouverture traversante (43) dans une partie d'assemblage (42), le pion (37) étant poussé à travers une ouverture (43) de la seconde pièce (34) et soudé de part et d'autre de la partie d'assemblage (42) de la seconde pièce (34), sur la première pièce (33).

4. Procédé suivant la revendication 3, caractérisé par le fait que la forme et la dimension de l'ouverture (43) de la seconde pièce sont telles qu'il existe, après assemblage, une certaine latitude de déplacement entre les pièces (33, 34).

5. Procédé suivant l'une quelconque des revendications 1 à 4, caractérisé par le fait que l'une des pièces (1, 20, 33) est un panneau extérieur de carrosserie d'une porte de véhicule automobile et l'autre pièce (2, 21, 34) une doublure intérieure sur laquelle est fixé le panneau.

6. Procédé suivant la revendication 5, caractérisé par le fait que le panneau (1) comporte un rebord d'assemblage (12) sensiblement parallèle à la surface du panneau, disposé du côté intérieur de ce panneau et traversé par une ouverture (13).

7. Procédé suivant la revendication 5, caractérisé par le fait que le panneau (33) comporte un rebord d'assemblage (35) sensiblement parallèle à la surface du panneau et disposé vers l'intérieur de celui-ci et délimite avec la surface intérieure du panneau (33) un espace pour le logement d'une partie d'assemblage (42) de la doublure (34).

8. Procédé suivant la revendication 7, caractérisé par le fait que le panneau (33) comporte des rainures (39) en saillie sur sa surface intérieure, en vis-à-vis du rebord d'assemblage (35).

9. Procédé suivant la revendication 5, caractérisé par le fait que le panneau (20) comporte un premier rebord d'assemblage (22) parallèle à la surface du panneau et disposé vers l'intérieur de celui-ci et un second rebord intermédiaire (23) parallèle au panneau et disposé entre le rebord (22) et la surface intérieure du panneau (20), une partie d'assemblage (28) de la doublure (21) étant introduite entre les rebords (22 et 23) et le rivet en matière plastique (25) étant soudé au panneau (20), au niveau du premier rebord (22) et du rebord intermédiaire (23).

## Claims

1. Process for assembling, by riveting, a first component (2,20,33) made of plastics and a second component (1,21,34), each having at least one assembly portion (3,12,22,28,35,42), the first component further having at least one rivet (5,25,37) integral with an assembly portion (3,22,35), the process consisting in placing the two components in an assembly position in which the assembly portions (3,12,22,28,35,42) of the two components face one another, effecting heating and at least partial fusion of the rivet (5,25,37) by subjecting it to ultrasound waves and joining, by welding, one end of the rivet to at least one of the assembly portions (3,12,22,28,35,42) of the two facing components, characterised in that the rivet (5,25,37) consists of a stud which is integrally formed with or fixed to the assembly portion (3,22,35) of the first component (2,20,33) made of plastics and connected thereto by a thin collar (6,38) at an opening which passes through the first component (2,20,33) and in that, under the effect of ultrasound waves, the said rivet (5,25,37) is separated from the first component by fusion of the collar and is then welded to the first component (2,20,33) inside the opening passing through said first component.

2. Process according to claim 1, characterised in that the plastics stud (5) is also pushed and extruded inside an opening (13) passing through an assembly flange (12) of the second component (1) parallel to said component (1) and returning towards the inside of the component (1).

3. Process according to claim 1, characterised in that the plastics rivet consists of a stud (37) which is integrally formed with or attached to an assembly portion (35) of one of the components (33) and in that the second component (34) has a through-opening (43) in an assembly portion (42), the stud (37) being pushed through an opening (43) in the second component (34) and welded, on both sides of the assembly portion (42) of the second component (34), to the first component (33).

4. Process according to claim 3, characterised in that the shape and dimensions of the opening (43) in the second component are such that, after assembly, there is a certain freedom of movement between the components (33,34).

5. Process according to any of claims 1 to 4, characterised in that one of the components (1,20,33) is an outer body work panel of an automotive vehicle door and the other component (2,21,34) is an inner lining to which the panel is fixed.

6. Process according to claim 5, characterised in that the panel (1) has an assembly flange (12) substantially parallel to the surface of the panel, arranged on the inside of this panel and pierced by an opening (13).

7. Process according to claim 5, characterised in that the panel (33) has an assembly flange (35) substantially parallel to the surface of the panel and arranged towards the inside thereof and defines, with the inner surface of the panel (33), a space for accommodating an assembly portion (42) of the lining (34).

8. Process according to claim 7, characterised in that the panel (33) has projecting grooves (39) on its inner surface, opposite the assembly flange (35).

9. Process according to claim 5, characterised in that the panel (20) has a first assembly flange (22) parallel to the surface of the panel and arranged towards the inside thereof and a second intermediate flange (23) parallel to the panel and arranged between the flange (22) and the inner surface of the panel (20), an assembly portion (28) of the lining (21) being inserted between the flanges (22 and 23) and the plastics rivet (25) being welded to the panel (20), level with the first flange (22) and the intermediate flange (23).

## Patentansprüche

1. Verfahren zum Verbinden von einem ersten Gegenstand (2, 20, 33) aus Kunststoff und einem zweiten Gegenstand (1, 21, 34) durch Vernieten, die jeweils wenigstens einen Montageteil (3, 12, 22, 28, 35, 42) aufweisen, wobei der erste Gegenstand außerdem wenigstens einen Niet (5, 25, 37) enthält, welcher mit einem Montageteil (3, 22, 35) fest verbunden ist, wobei das Verfahren darin besteht, daß die beiden Gegenstände in einer Montageposition angeordnet werden, in der die Montageteile (3, 12, 22, 28, 35, 42) der beiden Gegenstände einander gegenüberliegen, um so eine Erwärmung und wenigstens teilweise Aufschmelzung des Nietes (5, 25, 37) mit Hilfe von Ultraschallwellen zu erreichen und damit eine Schweißverbindung zwischen einem Ende des Nietes und wenigstens einem der Montageteile (3, 12, 22, 28, 35, 42) der beiden gegenüberliegenden Gegenstände herzustellen,
**dadurch gekennzeichnet, daß**
der Niet (5, 25, 37) aus einem einstückigen oder an dem Montageteil (3, 22, 35) des ersten Gegenstandes aus Kunststoff (2, 20, 35) angesetzten Stift besteht und mit diesem über einen dünnwandigen Kragen (6, 38) in Höhe einer Öffnung verbunden ist, welche den ersten Gegenstand (2, 20, 33) durchquert, und dadurch, daß unter der Einwirkung der Ultraschallwellen dieser Niet (5, 25, 37) von dem ersten Gegenstand durch Aufschmelzung des Kragens getrennt und dann mit dem ersten Gegenstand (2, 20, 33) innerhalb der ihn durchquerenden Öffnung verschweißt wird.

2. Verfahren nach Anspruch 1,
**dadurch gekennzeichnet, daß**
der Stift aus Kunststoff (5) außerdem in eine Öffnung (13) gedrückt und darin extrudiert wird, welche eine Montagekante (12) des zweiten Gegenstandes (1) parallel zu diesem Gegenstand (1) und rückwärts gegen das Innere dieses Gegenstandes (1) durchquert.

3. Verfahren nach Anspruch 1,
**dadurch gekennzeichnet, daß**
der Niet aus Kunststoff aus einem einstückigen oder an einem Montageteil (35) eines der Gegenstände (33) angesetzten Stift (37) besteht, und dadurch, daß der zweite Gegenstand (34) eine durchquerende Öffnung (43) in einem Montageteil (42) aufweist, wobei der Stift (37) durch eine Öffnung (43) in dem zweiten Gegenstand (34) gedrückt und an beidseitig mit dem Montageteil (42) des zweiten Gegenstandes an dem ersten Gegenstand (33) verschweißt wird.

4. Verfahren nach Anspruch 3,
**dadurch gekennzeichnet, daß**
die Form und die Abmessung der Öffnung (43) des zweiten Gegenstandes so beschaffen sind, daß nach Zusammenbau eine gewisse Bandbreite für eine Verschiebung zwischen den Gegenständen (33, 34) verbleibt.

5. Verfahren nach einem der Ansprüche 1 bis 4,
**dadurch gekennzeichnet, daß**
einer der Gegenstände (1, 20, 33) eine Außenwand der Karrosserie einer Tür eines Kraftfahrzeuges ist, und daß der andere Gegenstand (2, 21, 34) eine Innenverkleidung ist, an der die Wand befestigt ist.

6. Verfahren nach Anspruch 5,
**dadurch gekennzeichnet, daß**
die Wand (1) eine Montagekante (12) aufweist, die weitgehend parallel zu der Oberfläche der Wand verläuft und an der Innenseite dieser Wand angeordnet ist und von einer Öffnung (13) durchquert wird.

7. Verfahren nach Anspruch 5,
**dadurch gekennzeichnet, daß**
die Wand (33) eine Montagekante (35) aufweist, die weitgehend parallel zu der Oberfläche der Wand verläuft und zu dieser nach innen gerichtet ist und mit der Innenfläche der Wand (33) einen Raum für die Aufnahme eines Montageteils (42) der Verkleidung (34) bildet.

8. Verfahren nach Anspruch 7,
**dadurch gekennzeichnet, daß**
die Wand (33) Einkerbungen (39) aufweist, die aus ihrer Innenwand gegenüber der Montagekante (35) hervorstehen.

9. Verfahren nach Anspruch 5,
**dadurch gekennzeichnet, daß**
die Wand (20) eine erste Montagekante (22) aufweist, welche parallel zu der Oberfläche der Wand verläuft und zu dieser nach innen gerichtet ist, sowie eine zweite zwischengeordnete Kante (23), welche parallel zu der Wand verläuft und zwischen der Kante (22) und der Innenfläche der Wand (20) angeordnet ist, wobei eines der Montageteile (28) der Verkleidung (21) zwischen den Kanten (22 und 23) und der aus Kunststoff bestehende Niet (25) mit der Wand (20) in Höhe der ersten Kante (22) und der Zwischenkante (23) verschweißt wird.
